# EUROPÄISCHE PATENTSCHRIFT

(11) **EP 1 541 428 B1**
(45) Veröffentlichungstag und Bekanntmachung des Hinweises auf die Patenterteilung: **30.03.2011**
(21) Anmeldenummer: 04106311.6
(22) Anmeldetag: 06.12.2004
(51) Int. Cl.: B60R 21/16, B60R 21/26

(54) **Gasgenerator**
Gas generator
Générateur de gaz

(30) Priorität: 09.12.2003 AT 8802003 U
(43) Veröffentlichungstag der Anmeldung: 15.06.2005
(73) Patentinhaber: iSi Airbag GmbH, 1210 Wien (AT)
(72) Erfinder: Schäfer, Dietmar, 1130 Wien (AT)
(74) Vertreter: KLIMENT & HENHAPEL

(56) Entgegenhaltungen:
- EP-A- 0 695 552
- DE-A1- 2 501 602
- DE-A1- 4 018 348
- US-A- 4 556 236
- US-A- 5 584 507
- US-A1- 2002 005 010

## Beschreibung

Die vorliegende Erfindung bezieht sich auf einen Gasgenerator zum Aufblasen eines Airbags, mit Hilfe eines aus einem mit einem zerstörbaren Dichtelement verschließbaren Gasdruckbehälter ausströmenden Gases gemäß dem Oberbegriff des Anspruchs 1.

Gasgeneratoren zum Aufblasen eines Airbags sind allgemein in unterschiedlichen Ausführungsvarianten bekannt.

Unabhängig davon, ob es sich bei den Gasgeneratoren um rein pyrotechnisch betriebene Gasgeneratoren handelt oder aber um Hybrid- oder Kaltgasgeneratoren, tritt das der Erfindung zugrunde liegende Problem bei allen bekannten Gasgeneratoren auf.

Hybrid- oder Kaltgasgeneratoren bestehen im wesentlichen aus einem Gasdruckbehälter, welcher über ein zerstörbares Dichtelement verschlossen ist, sowie einem Öffnungsmechanismus und einer in den Gassack mündenden Auslassöffnung. Es sind dabei mehr oder weniger komplizierte Öffnungsmechanismen bekannt, die allesamt das Ziel haben, das den Gasdruckbehälter verschließende Dichtelement zu zerstören und so das Gas in den Gassack strömen zu lassen.

Als Initiator der Öffnungsprozedur findet dabei eine sogenannte Zündpille Verwendung, die durch Anlegen einer elektrischen Spannung aktiviert wird. Die Zündpille beinhaltet eine geringe Menge an pyrotechnischem Material. Die bei der Explosion der Zündpille entstehende heiße Druckwelle wird unterschiedlich genutzt. Sie kann beispielsweise direkt auf das zu zerstörende Dichtelement gelenkt werden, oder aber dazu benutzt werden, weiteres pyrotechnisches Material zu zünden, wodurch in weiterer Folge das Dichtelement zerstört wird. Es sind aber auch Ausführungsvarianten bekannt, wo die erzeugte Druckwelle dazu benutzt wird, dafür vorgesehene Projektile auf das Dichtelement, vorzugsweise eine Membran, zu schießen, und diese dadurch zu zerstören. Es sind weitere Öffnungsmechanismen ebenfalls bekannt, auf die jedoch nicht näher eingegangen wird, da sie für die Erfindung nicht wesentlich sind.

Unabhängig vom eingesetzten Öffnungsmechanismus gelangen durch den Abbrand der Zündpille bzw. des zusätzlichen pyrotechnischen Materials Gerüche in das Innere eines Kraftfahrzeugs, welche in weiterer Folge von den Insassen als unangenehm empfunden werden. Oft sind die Kraftfahrzeuge nach einem Unfall, bei welchem der Airbag ausgelöst hat, nach Reparatur wieder verwendbar. Der erwähnte Geruch hält sich jedoch hartnäckig im Wageninneren, insbesondere in den im Wageninneren verwendeten Stoffen. Dies bedingt nicht nur absolut gesehen eine Geruchsbelästigung der Insassen sondern erinnert diese auch ständig an den den Airbag auslösenden Vorfall, in der Regel ein Unfall.

Die beschriebenen Nachteile treffen natürlich in besonderem Maße auf rein pyrotechnisch betriebene Gasgeneratoren zu.

Aus der DE 3235176 A1 ist es daher bekannt, innerhalb des Airbags einen mit Duftstoffen gefüllten, geschlossenen Behälter zu befestigen, der während des Aufblasvorgangs selbsttätig geöffnet wird. Dadurch kann die Geruchsbelästigung bei nach einem Unfall wieder verwendeten Fahrzeugen hintangehalten werden. Nachteilig bei diesem bekannten System ist jedoch die umständliche und aufwändige Befestigung des Behälters im Inneren des Airbags sowie der damit verbundene Öffnungsmechanismus.

Ziel der vorliegenden Erfindung ist es daher, einen Gasgenerator der eingangs erwähnten Art zu schaffen, der diesen Nachteil verhindert.

Erfindungsgemäß wird dies durch die kennzeichnenden Merkmale des Anspruchs 1 und 3 2 erreicht.

Durch die Befüllung des Gasdruckbehälters mit einem Gemisch aus Gas zum Öffnen des Airbags und einem Aromastoff, kann das Ziel der Erfindung mit wesentlich einfacheren Mitteln erreicht werden, als dies aus dem Stand der Technik bekannt ist. Die Befüllung kann auch entsprechend schnell und einfach adaptiert werden, sowie eine Änderung des Mischungsverhältnisses vorgenommen werden. Der Aromastoff wird bei Auslösen des Airbags mit Sicherheit im Wageninnenraum verbreitet und ist nicht von zusätzlichen Öffnungsmechanismen abhängig.

Im Anschluss erfolgt nun eine detaillierte Beschreibung der Erfindung. Dabei zeigt
- Fig.1: eine Schnittansicht im Schrägriss eines Gasgenerators mit axialem Gasaustritt
- Fig. 2: eine Schnittansicht einer Ausführungsform eines Gasgenerators mit axialem Gasaustritt
- Fig.3: eine Schnittansicht im Schrägriss eines Gasgenerators mit radialem Gasaustritt
- Fig.4: eine Schnittansicht einer Ausführungsform eines Gasgenerators mit radialem Gasaustritt
- Fig.5: eine Schnittansicht einer bekannten Zündpille

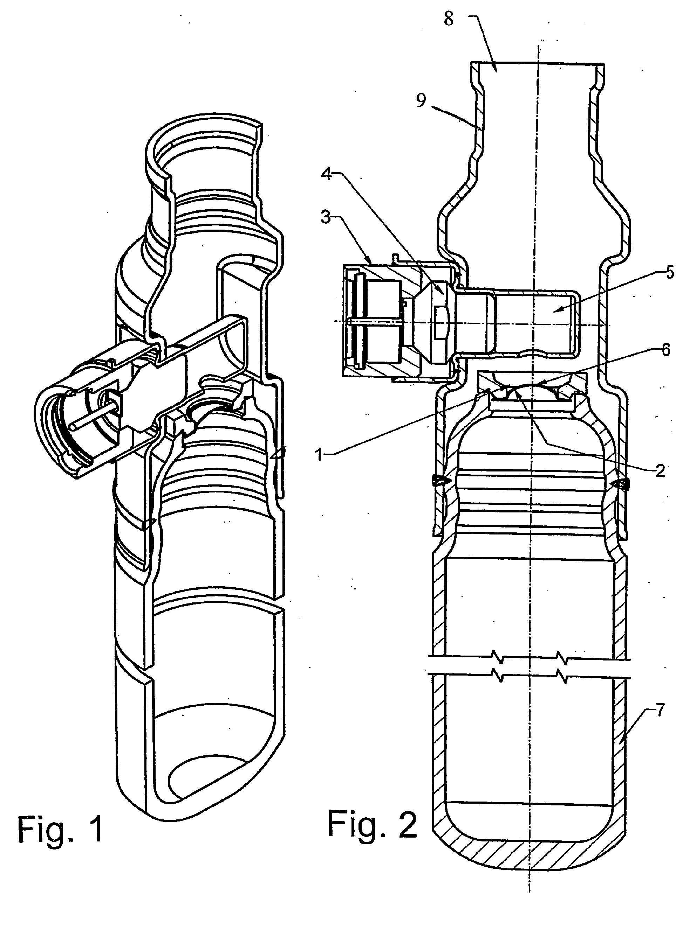

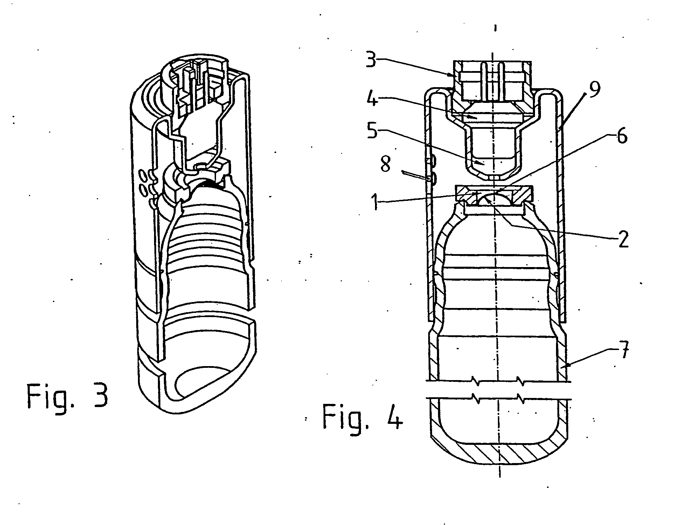

Fig.1,2,3,4 zeigen einen Kaltgasgenerator mit einem bekannten Öffnungsmechanismus, wobei in Fig.1 und 2 eine Abströmung des freigesetzten Gases in axialer Richtung möglich ist und in Fig.3 und 4 das Ausströmen des Gases in radialer ist und in Fig. 3 und 4 das Ausströmen des Gases in radialer Richtung. Im Bereich oberhalb der Ausströmöffnung 1 des Gasspeichers ist der Öffnungsmechanismus angeordnet, welcher zur Zerstörung der Membran 2 dient und im wesentlichen aus einer Zündpillenhalterung 3, einer Zündpille 4 und einer Düsenkammer 5 besteht.

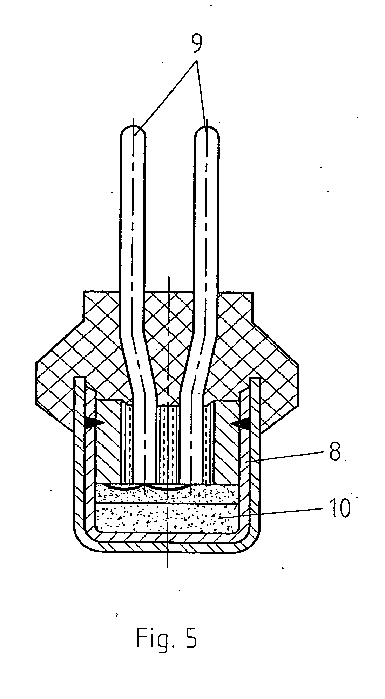

Bei der Zündpille 4 handelt es sich um einen Anzünder, dessen wesentlicher Aufbau eine geringe Menge Zündladung 10 in einem Gehäuse 8 aufweist. In die Zündpille 4 sind von außerhalb derselben elektrisch kontaktierbare Zündpins 9 geführt, welche nach Anlegen einer Spannung die Zündladung 10 zünden (siehe Fig.5).

Soll der Gassack, insbesondere der Airbag aufgeblasen werden, wird, wie erwähnt, zuerst die Zündpille 4 durch Anlegen eines elektrischen Zündimpulses gezündet. Die Energiefreisetzung wird in der Düsenkammer 5 gebündelt und als Heißgasstrahl konzentriert auf den höchsten Punkt 6 der Membran 2 geleitet, welche die Ausströmöffnung 1 des Gasdruckbehälter 7 verschließt. An diesem Punkt 6 tritt im Zuge der Druckbelastung der Membran 2 durch die Gasfüllung die höchste Spannung auf, wodurch sich dort ihre dünnste Stelle ergibt. Da der Werkstoff der Membran 2 bei Temperatureinwirkung stark an Festigkeit verliert bewirkt die partielle Erhitzung durch den gebündelten Heißgasstrahl eine Schwächung und damit die Zerstörung der unter Last stehenden Membran 2 im Bereich des angeströmten Punktes 6. Die Dynamik des entweichenden, stark komprimierten Gas im Gasdruckbehälter 7 bewirkt in Folge die vollständige Freilegung der Ausströmöffnung 1.

Es sind aber auch Gasgeneratoren bekannt, die zusätzliche, außerhalb der Zündpille angeordnete Treibladungen aufweisen. Die vorliegende Erfindung ist selbstverständlich auch auf diese Gasgeneratoren, sowie auf alle anderen bekannten Gasgeneratoren anwendbar, auch auf jene ausschließlich pyrotechnisch betriebene Gasgeneratoren.

Erfindungsgemäß ist der Gasdruckbehälter 7 mit einem Gemisch aus Gas zum Aufblasen des Airbags und einem Aromastoff gefüllt, wodurch der Airbag automatisch bei Auslösung mit diesem Gemisch aufgeblasen wird und sich dieses demgemäß nach Erschlaffen des Airbags im Fahrzeug verteilt.

Zum Einsatz kommen können dabei alle denkbaren Aromastoffe, also natürliche Aromastoffe, naturidentische Aromastoffe, künstliche Aromastoffe, Aromaextrakte sowie Reaktionsaromen.

## Patentansprüche

1. Gasgenerator zum Aufblasen eines Airbags, mit Hilfe eines aus einem mit einem zerstörbaren Dichtelement (2) verschließbaren Gasdruckbehälter (7) ausströmenden Gases **dadurch gekennzeichnet, dass** dem im Gasdruckbehälter (7) gespeicherten Gas ein Aromastoff beigemengt ist, um den Airbag mit einem Gemisch aus dem Gas und dem Aromastoff zu befüllen.

2. Gasgenerator nach Anspruch 1, **dadurch gekennzeichnet, dass** es sich um einen Hybrid- oder Kaltgasgenerator handelt.

## Claims

1. A gas generator for inflating an airbag with the help of a gas flowing from a gas pressure vessel (7) which is sealable with a destructible sealing element (2), **characterized in that** an aromatic substance is admixed to the gas stored in the gas pressure vessel (7) in order to fill the airbag with a mixture of gas and the aromatic substance.

2. A gas generator according to claim 1, **characterized in that** it concerns a hybrid or cold-gas generator.

## Revendications

1. Générateur pour le gonflage d'un coussin gonflable de sécurité à l'aide d'un gaz s'écoulant d'un réservoir de gaz sous pression (7) qui peut être fermé par un élément d'étanchéité (2) pouvant être détruit, **caractérisé en ce que** le gaz stocké dans le réservoir d'air sous pression (7) est additionné d'un arôme afin de remplir le coussin gonflable de sécurité du gaz et de l'arôme.

2. Générateur de gaz selon la revendication 1, **caractérisé en ce qu'**il s'agit d'un générateur de gaz hybride ou froid.
